# EUROPÄISCHE PATENTANMELDUNG

(11) **EP 4 764 229 A1**
(43) Veröffentlichungstag der Anmeldung: **24.06.2026**
(21) Anmeldenummer: 24221614.1
(22) Anmeldetag: 19.12.2024
(51) Int. Cl.: F16B 2/18, F16B 7/04

(54) **ANORDNUNG**

(71) Anmelder: Geberit International AG, 8645 Jona (CH)
(72) Erfinder: ZWICKER, Maurus, 8733 Eschenbach (CH)
(74) Vertreter: Frischknecht, Harry Ralph

(57) **Zusammenfassung**

Eine Anordnung umfasst ein sich entlang einer ersten Profilachse (A1) ersteckendes erstes Profil (1) mit einer ersten Profilnut (2),
ein sich entlang einer zweiten Profilachse (A2) ersteckendes zweites Profil (3) mit einer zweiten Profilnut (4) und
mindestens eine Verbindungseinheit (5) mit einem Supportelement (6) mit einer ersten Seite (7), die dem ersten Profil zugewandt ist, und einer zweiten Seite (8), die dem zweiten Profil zugewandt ist, sowie mit einem ersten Rastelement (9) und einem zweiten Rastelement (10), wobei das erste Rastelement von einer Ausgangslage um eine erste Schwenkachse (S1) in eine Verbindungslage schwenkbar am Supportelement gelagert ist und das zweite Rastelement von einer Ausgangslage um eine zweite Schwenkachse (S2) in eine Verbindungslage schwenkbar am Supportelement gelagert ist, und wobei in der jeweiligen Verbindungslage das erste Rastelement in festem Eingriff mit der ersten Profilnut ist und das zweite Rastelement in festem Eingriff mit der zweiten Profilnut ist.

## Beschreibung

### TECHNISCHES GEBIET

Die vorliegende Erfindung betrifft eine Anordnung mit zwei Profilen und einer Verbindungseinheit zur Verbindung der Profile nach Anspruch 1, eine Sanitärwand nach Anspruch 16 und ein Verfahren nach Anspruch 17.

### STAND DER TECHNIK

Aus dem Stand der Technik sind Wandsysteme für Sanitärräume bekannt geworden. Derartige Wandsysteme werden mit Profilen bereitgestellt, welche dann mit einer Beplankungswand verkleidet werden. Die Profile dienen einerseits als Stützelemente für die Beplankungswand. Andererseits sind die Profile auch dafür ausgebildet, Lagerstellen für Sanitärartikel bereitzustellen.

### DARSTELLUNG DER ERFINDUNG

Es ist eine Aufgabe der vorliegenden Erfindung, eine Anordnung anzugeben, bei welcher zwei Profile einfach miteinander verbunden werden können.

Diese und andere Aufgaben löst die Anordnung nach Anspruch 1. Demgemäss umfasst eine Anordnung ein sich entlang einer ersten Profilachse ersteckendes erstes Profil mit einer ersten Profilnut, ein sich entlang einer zweiten Profilachse ersteckendes zweites Profil mit einer zweiten Profilnut und mindestens eine Verbindungseinheit mit einem Supportelement mit einer ersten Seite, die dem ersten Profil zugewandt ist, und einer zweiten Seite, die dem zweiten Profil zugewandt ist, sowie mit einem ersten Rastelement und einem zweiten Rastelement. Das erste Rastelement ist von einer Ausgangslage um eine erste Schwenkachse in eine Verbindungslage schwenkbar am Supportelement gelagert. Das zweite Rastelement ist von einer Ausgangslage um eine zweite Schwenkachse in eine Verbindungslage schwenkbar am Supportelement gelagert. In der jeweiligen Verbindungslage ist das erste Rastelement in festem Eingriff mit der ersten Profilnut und das zweite Rastelement ist in festem Eingriff mit der zweiten Profilnut, derart, dass mit der mindestens einen Verbindungseinheit das erste Profil mit dem zweiten Profil verbunden ist.

Durch die Verschwenkung der beiden Rastelement ergeht der Vorteil, dass die beiden Profile sehr einfach miteinander verbunden werden können.

Vorzugsweise sind die Profile jeweils Teil von Montagerahmen. Die Montagerahmen können mit einer Beplankung versehen sein, so dass die Montagerahmen eine Wand bilden. Besonders bevorzugt ist die Wand eine Wand eines Sanitärraums. In diesem Fall weist der Montagerahmen Traversen auf, an denen Sanitärartikel, wie Toilettenschüsseln, Urinale, Waschtische, Waschtischmöbel, Armaturen, Spülkästen und dergleichen befestigt werden können.

Durch die mindestens eine Verbindungseinheit können die genannten Rahmen beispielsweise in einem Produktionswerk vor dem Transport gefertigt werden. Die genannten Rahmen können auf der Baustelle mit der Verbindungseinheit zusammengebaut werden.

Vorzugsweise stehen die Schwenkachsen rechtwinklig zu den Profilachse.

Wenn das erste Profil und das zweite Profil miteinander verbunden sind, verlaufen die erste Profilachse und die zweite Profilachse vorzugsweise parallel zueinander.

Die Anzahl der anzuordnen Verbindungseinheiten ist im Wesentlichen von der Profillänge abhängig. Typischerweise beträgt der Abstand zwischen zwei Verbindungseinheiten 20 cm bis 120 cm, vorzugsweise beträgt der Abstand zwischen 20 cm und 100 cm.

In einer bevorzugten Ausführungsform sind das erste Rastelement und das zweite Rastelement an einem ersten Hebelelement angeordnet, wobei die erste Schwenkachse und die zweite Schenkachse eine gemeinsame Schwenkachse bilden und wobei das erste Hebelelement um die gemeinsame Schwenkachse verschwenkbar ist.

Hierdurch ergeht der Vorteil, dass der feste Eingriff zwischen dem ersten Rastelement und dem ersten Profil zeitgleich zum festen Eingriff zwischen dem zweiten Rastelement und dem zweiten Profil hergestellt werden kann.

Die erste und die zweite Schwenkachse verlaufen kollinear zueinander.

Das erste Hebelelement ist am Supportelement schwenkbar gelagert, derart, dass das erste Rastelement und das zweite Rastelement mit dem ersten Hebelelement von der Ausgangslage in die Verbindungslage verschwenkbar sind.

Vorzugsweise ist ein zweites Hebelelement angeordnet, welches ein drittes Rastelement aufweist, wobei das zweite Hebelelement von einer Ausgangslage um eine weitere Schwenkachse in eine Verbindungslage schwenkbar am Supportelement gelagert ist. Das dritte Rastelement ist in der Verbindungslage in festem Eingriff mit der ersten Profilnut.

Das zweite Hebelelement bringt die Eigenschaft mit sich, dass bei der bevorzugten Ausführungsform vor der Herstellung des festen Eingriff zwischen dem ersten Rastelement und dem ersten Profil sowie dem festen Eingriff zwischen dem zweiten Rastelement und dem zweiten Profil, die Verbindungseinheit über das dritte Rastelement zum ersten Profil fixiert werden kann. Das vereinfacht die Montage weiterhin.

Das zweite Hebelelement ist am Supportelement schwenkbar gelagert, derart, dass das dritte Rastelement mit dem zweiten Hebelelement von der Ausgangslage in die Verbindungslage verschwenkbar ist.

Vorzugsweise sind das erste Hebelelement und das zweite Hebelelement aus unterschiedlichen Materialien. Das Material des ersten Hebelelements weist eine höhere Festigkeit auf als das Material des zweiten Hebelelements. In anderen Ausführungsformen können die Hebelelemente auch aus einem gleichen Material sein.

Vorzugsweise ist das Material des ersten Hebelelements ein druckgiessbares Metall ist, wie ein Material für einen Zinkdruckguss oder ein Material für einen Aluminiumdruckguss. Vorzugsweise ist das Material des zweiten Hebelelements ein Kunststoff, wie Acrylnitril-Styrol-Acrylat-Copolymer, Acrylnitril-Butadien-Styrol-Copolymer oder ein ähnlicher Kunststoff ist.

Vorzugsweise stellt der feste Eingriff zwischen dem ersten Rastelement und der ersten Profilnut eine feste Rastverbindung zwischen der Verbindungseinheit und dem ersten Profil bereit. Vorzugsweise stellt der feste Eingriff zwischen dem zweiten Rastelement und der zweiten Profilnut eine feste Rastverbindung zwischen der Verbindungseinheit und dem zweiten Profil bereit. Vorzugsweise stellt der feste Eingriff zwischen dem dritten Rastelement und der ersten Profilnut eine Halteverbindung bereit. Die Halteverbindung ist vorzugsweise derart ausgebildet, dass diese im Wesentlichen die Verbindungseinheit am Profil hält. Insbesondere die Halteverbindung derart ausgebildet, dass diese kleinere Kräfte, aufnehmen kann als die besagte feste Rastverbindung. Die Halteverbindung kann aber auch so ausgebildet sein, dass diese die gleiche Kraft aufnehmen kann als die Rastverbindung.

Mit anderen Worten gesagt dient die Halteverbindung im Wesentlichen der Positionierung der Verbindungseinheit und sorgt dafür, dass sich die Verbindungseinheit nach der Positionierung nicht weiter verschiebt. Die feste Verbindung sorgt dafür, dass die beiden Profile über die Verbindungseinheit fest zueinander verbunden werden.

Vorzugsweise weist das zweite Hebelelement einen Positionierungsabschnitt auf, welcher der zweiten Seite zugewandt ist, wobei während der Positionierung des zweiten Profils der Positionierungsabschnitt in die zweite Profilnut einführbar ist.

Mit dem Positionierungsabschnitt kann das zweite Profil einfach zur Verbindungseinheit, insbesondere zur bereits am ersten Profil montierten Verbindungseinheit, positioniert und in einen Eingriff gebracht werden. Im montierten Zustand ragt der Positionierungsabschnitt in die zweite Profilnut ein.

Vorzugsweise weist das erste Hebelelement einen ersten Betätigungsarm auf und das zweite Hebelelement weist einen zweiten Betätigungsarm auf.

Vorzugsweise wird der zweite Betätigungsarm vom ersten Betätigungsarm überdeckt, wenn die Rastelemente in der Verbindungslage sind.

In der Verbindungslage liegen die beiden Betätigungsarme vorzugsweise vollständig im Zwischenraum zwischen den beiden Profilen und stehen nicht aus dem Zwischenraum zwischen den beiden Profilen seitlich zu den Profilachsen hervor.

Vorzugsweise ist der erste Betätigungsarm länger ausgebildet als der zweite Betätigungsarm.

In einer weiteren Ausführungsform ist das erste Rastelement an einem ersten Hebelelement angeordnet, welches erste Hebelelement um die erste Schwenkachse verschwenkbar ist. Das zweite Rastelement ist an einem weiteren Hebelelement angeordnet, welches weitere Hebelelement um die zweite Schwenkachse verschwenkbar, wobei die erste Schwenkachse und die zweite Schwenkachse parallel beabstandet zueinander verlaufen.

Vorzugsweise ist das Material des ersten und des weiteren Hebelelements bei der weiteren Ausführungsform ein druckgiessbares Metall ist, wie Zinkdruckguss oder Aluminiumdruckguss. Vorzugsweise weist das erste Hebelelement einen ersten Betätigungsarm auf und dass weitere Hebelelement weist einen weiteren Betätigungsarm auf. Vorzugsweise wird der zweite Betätigungsarm vom ersten Betätigungsarm überdeckt, wenn die Rastelement in der Verbindungslage sind. In der Verbindungslage liegen die beiden Betätigungsarme vorzugsweise vollständig im Zwischenraum zwischen den beiden Profilen und stehen nicht aus dem Zwischenraum zwischen den beiden Profilen seitlich zu den Profilachsen hervor.

In der Folge werden weitere optionale Merkmale für alle genannten Ausführungsformen beschrieben.

Jeder der genannten Hebelelemente weist jeweils eine hebelseitige Lagerstelle auf. Das Supportelement weist für jedes der genannten Hebelelemente jeweils eine supportelementseitige Lagerstelle auf. Die jeweilige hebelseitige Lagerstelle ist in der jeweiligen supportelementseitigen Lagerstelle schwenkbar gelagert.

Vorzugsweise ist die hebelseitige Lagerstelle eine Achse und die supportelementseitige Lagerstelle eine Achsenaufnahme.

Vorzugsweise weist das Supportelement auf der ersten Seite ein erstes Führungselement auf, welches in die erste Profilnut einragt. Vorzugsweise weist das Supportelement auf der zweiten Seite ein zweites Führungselement auf, welches in die zweite Profilnut einragt.

Die Führungselemente dienen der Bereitstellung einer Führung zwischen dem Supportelement und dem jeweiligen Profil. Bei der Montage gleitet das jeweilige Führungselement in die jeweilige Profilnut ein. Im montierten Zustand ragt das jeweilige Führungselement in die jeweilige Profilnut ein.

Vorzugsweise weist das Supportelement auf der ersten Seite eine erste Stützfläche auf, auf welcher das erste Profil mit einer ersten Aussenfläche aufliegt. Vorzugsweise weist das Supportelement auf der zweiten Seite eine zweite Stützfläche auf, auf welcher das zweite Profil mit einer zweiten Aussenfläche aufliegt.

Vorzugsweise ist die erste Profilnut und die zweite Profilnut durch jeweils einen Grundschenkel und zwei vom Grundschenkel abstehende Seitenschenkel begrenzt. Jeder der Seitenschenkel weist eine in die jeweilige Profilnut einragende Auskragung auf. Die Rastelemente verfügen jeweils über zwei Rastnuten, welche bezüglich der Schwenkachse einander gegenüberliegen. Jede der beiden Rastnuten geht bei der Schwenkbewegung von der Ausgangslage in die Verbindungslage einen Eingriff mit jeweils einer Auskragung ein.

Vorzugsweise sind das erste Profil und das zweite Profil identisch zueinander ausgebildet.

Vorzugsweise weist das erste Profil und das zweite Profil einen im Wesentlichen quadratischen Querschnitt auf, wobei auf jeder der Aussenflächen jeweils eine entsprechende Profilnut angeordnet ist.

Vorzugsweise weisen die erste Profilnut und/oder die zweite Profilnut am Nutengrund eine Vielzahl von beabstandet zueinander liegenden Rasteinbuchtungen auf. Vorzugsweise weist mindestens eines der Rastelemente eine Nocke auf, welche zur Positionierung der Verbindungseinheit in ein der Rasteinbuchtungen eingreift, wobei die Nocke zentrisch zur besagten Schwenkachse liegt.

Eine Sanitärwand umfasst eine Anordnung nach obiger Beschreibung und eine Beplankungswand, wobei die Beplankungswand auf den genannten Profilen aufliegt.

Vorzugsweise bilden die Profile einen Profilrahmen und die Beplankungswand liegt auf den Profilen auf.

Ein Verfahren zum Zusammenbau einer Anordnung nach obiger Beschreibung umfasst die folgenden Schritte:
- In einem ersten Schritt wird das erste Profil auf der ersten Seite des Supportelements positioniert.
- In einem zweiten Schritt wird das zweite Profil auf der zweiten Seite des Supportelements positioniert.
- In einem dritten Schritt wird das erste Rastelement von seiner Ausgangslage in die Verbindungslage verschwenkt, so dass das erste Rastelement in den festen Eingriff mit der ersten Profilnut gebracht wird und ebenfalls wird das zweite Rastelement von seiner Ausgangslage in die Verbindungslage verschwenkt, so dass das zweite Rastelement in den festen Eingriff mit der zweiten Profilnut gebracht wird.

Bei den Varianten in denen das dritte Rastelement vorhanden ist, wird in einem Zwischenschritt zwischen dem ersten und dem zweiten Schritt, das dritte Rastelement von seiner Ausgangslage in die Verbindungslage verschwenkt wird, so dass das dritte Rastelement in den festen Eingriff mit der ersten Profilnut gebracht wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Verbindungseinheit einer Anordnung nach einer ersten Ausführungsform der vorliegenden Erfindung, wobei Rastelemente in der Ausgangslage sind;
- Fig. 2: eine Ansicht auf die Verbindungseinheit nach Figur 1 von unten;
- Fig. 3: eine Ansicht auf die Verbindungseinheit nach Figur 1 von oben;
- Fig. 4: eine perspektivische Ansicht der Verbindungseinheit nach den vorhergehenden Figuren, wobei Rastelemente in der Verbindungslage sind;
- Fig. 5: eine Ansicht auf die Verbindungseinheit nach Figur 4 von unten;
- Fig. 6: eine Ansicht auf die Verbindungseinheit nach Figur 4 von oben;
- Fig. 7: eine perspektivische Ansicht der Anordnung nach einer Ausführungsform der vorliegenden Erfindung während der Montage;
- Fig. 8: eine perspektivische Ansicht der Anordnung nach Figur 7 nach weiteren Schritten während der Montage;
- Fig. 9: eine perspektivische Ansicht der Anordnung nach Figur 7 nach weiteren Schritten während der Montage;
- Fig. 10: eine Frontansicht der Figur 9;
- Fig. 11: eine perspektivische Ansicht der Anordnung nach Figur 7 nach erfolgter Montage; und
- Fig. 12: eine Frontansicht der Figur 11.

### BESCHREIBUNG BEVORZUGTER AUSFÜHRUNGSFORMEN

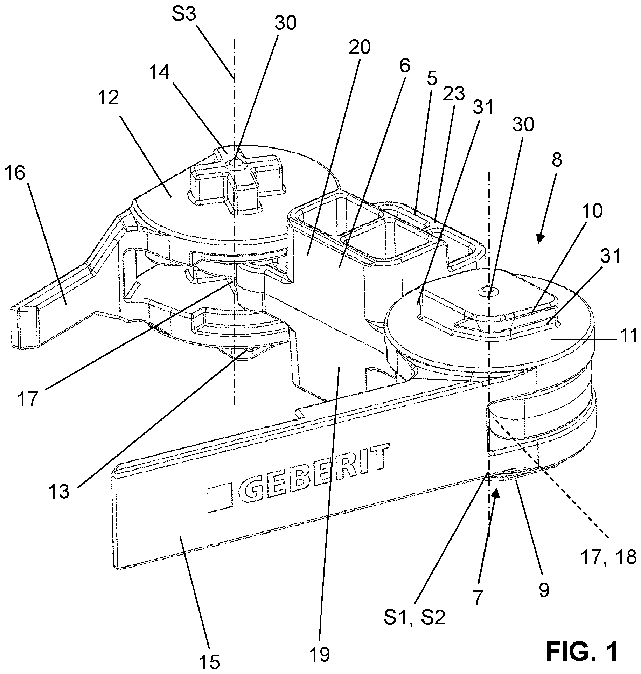

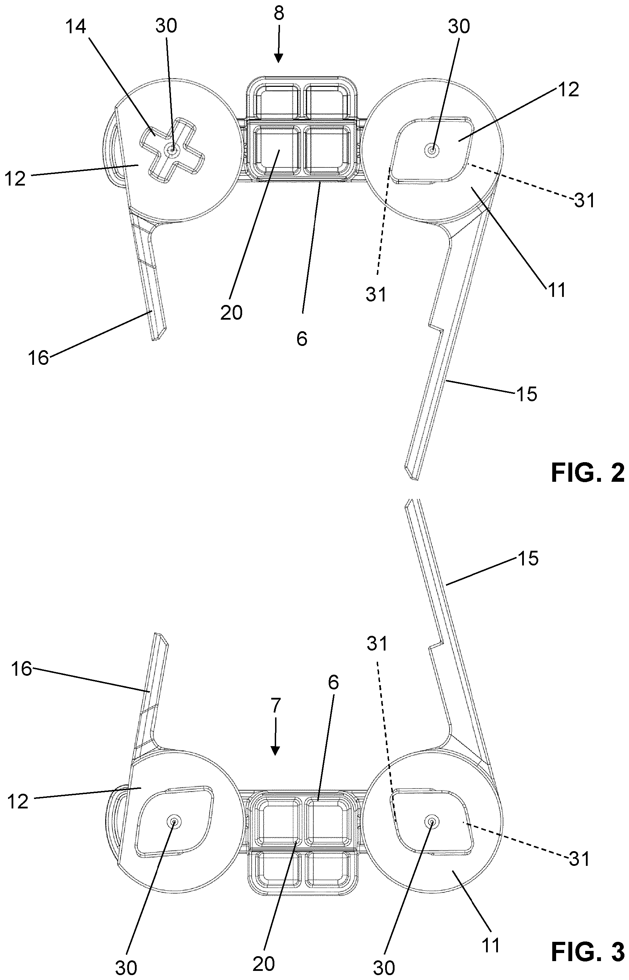

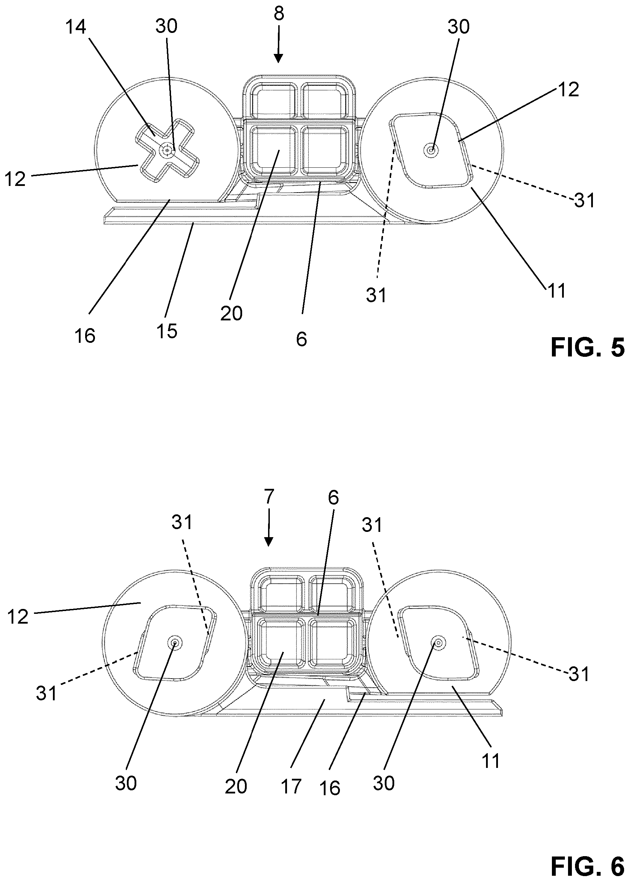

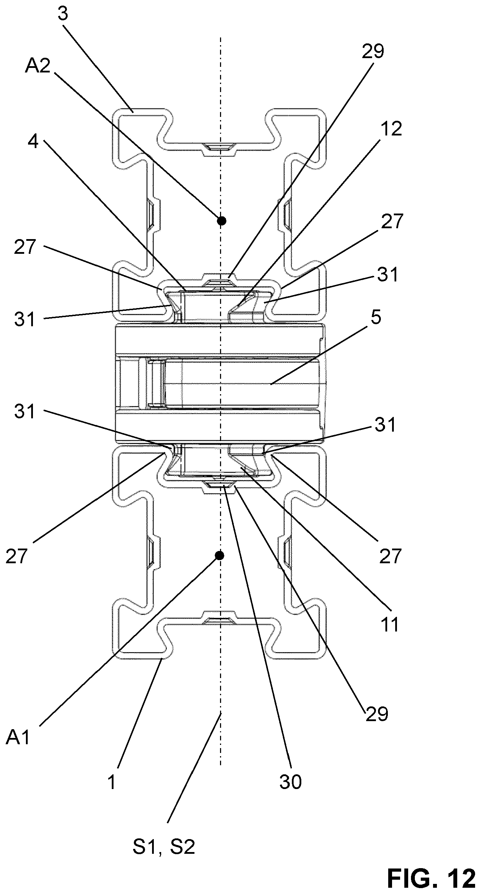

In den Figuren 1 bis 5 wird eine Verbindungseinheit 5 gezeigt. Die Verbindungseinheit 5 ist Teil einer Anordnung, welche in den Figuren 12 gezeigt wird.

Die Anordnung gemäss einer Ausführungsform der vorliegenden Erfindung umfasst ein erstes Profil 1, ein zweites Profil 3 und mindestens eine der genannten Verbindungseinheit 5. Die mindestens eine Verbindungseinheit 5 dient der Verbindung der beiden Profile 1, 3.

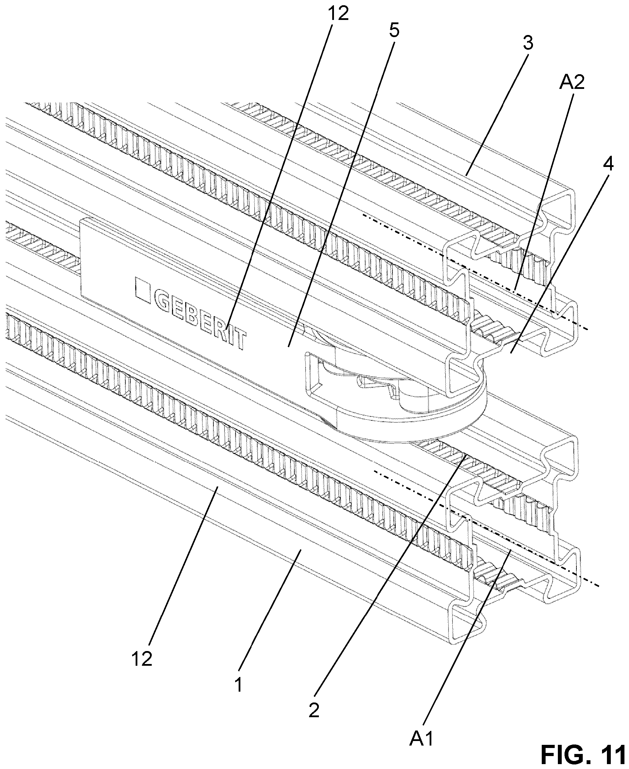

Das erste Profil 1 erstreckt sich entlang einer ersten Profilachse A1. Das erste Profil 1 weist mindestens eine erste Profilnut 2 auf. In der gezeigten Ausführungsform sind vier erste Profilnuten 2 an vier unterschiedlichen Seiten des ersten Profils 1 angeordnet. Das zweite Profil 3 erstreckt sich entlang einer zweiten Profilachse A2. Das zweite Profil 2 weist mindestens eine zweite Profilnut 4 auf. In der gezeigten Ausführungsform sind vier zweite Profilnuten 4 an vier unterschiedlichen Seiten des zweiten Profils 3 angeordnet. Im verbundenen Zustand, so wie in den Figuren 11 und 12 gezeigt liegen die beiden Profile 1, 3 beabstandet zueinander und die Verbindungseinheit 5 liegt im Zwischenraum Z zwischen den beiden Profilen 1, 3.

Die mindestens eine Verbindungseinheit 5 weist ein Supportelement 6, ein erstes Rastelement 9 und zweites Rastelement 10 auf. Das Supportelement 6 ist mit einer ersten Seite 7 dem ersten Profil 1 und mit einer zweiten Seite 8 dem zweiten Profil 3 zugewandt.

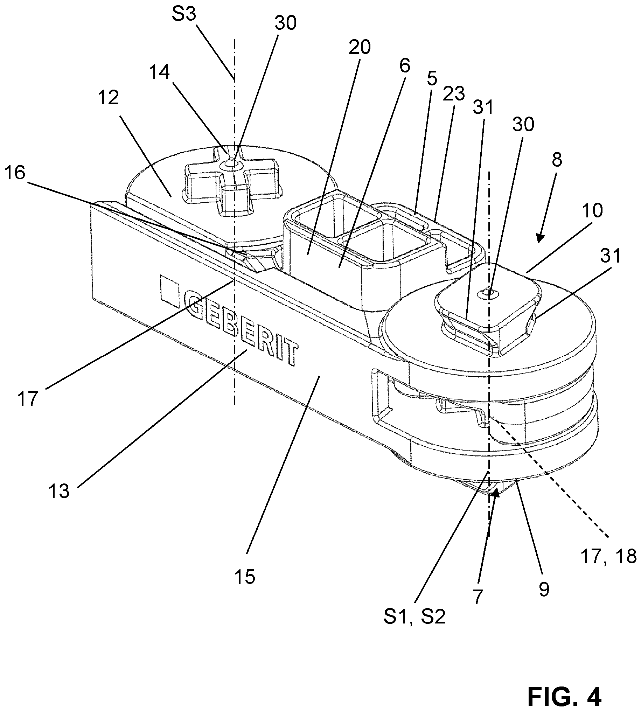

Das erste Rastelement 9 ist von einer Ausgangslage um eine erste Schwenkachse S1 in eine Verbindungslage schwenkbar am Supportelement 6 gelagert. In der gezeigten Ausführungsform ist das erste Rastelement 9 Teil eines ersten Hebelelements 11, welches schwenkbar am Supportelement 6 gelagert ist. In den Figuren 1 bis 3 und 7 bis 10 ist das erste Rastelement 9 in der Ausgangslage gezeigt. In den Figuren 4 bis 6 und 11 bis 12 ist das erste Rastelement 9 in der Verbindungslage gezeigt.

Das zweite Rastelement 10 ist von einer Ausgangslage um eine zweite Schwenkachse S2 in eine Verbindungslage schwenkbar am Supportelement 6 gelagert. In der gezeigten Ausführungsform ist das zweite Rastelement 10 Teil des ersten Hebelelements 11. In den Figuren 1 bis 3 und 7 bis 10 ist das zweite Rastelement 10 in der Ausgangslage gezeigt. In den Figuren 4 bis 6 und 11 bis 12 ist das zweite Rastelement 10 in der Verbindungslage gezeigt.

In der jeweiligen Verbindungslage ist das erste Rastelement 9 in festem Eingriff mit der ersten Profilnut 2 und das zweite Rastelement 10 ist in festem Eingriff mit der zweiten Profilnut 4. Der feste Eingriff ist dabei derart, dass mit der mindestens einen Verbindungseinheit 5 das erste Profil 1 mit dem zweiten Profil 3 verbunden ist. Die Verbindung ist dabei so, dass die Verbindungseinheit 5 eine feste Verbindung zwischen den beiden Profilen 1 und 3 bereitstellt.

Wie erwähnt sind in der gezeigten Ausführungsform das erste Rastelement 9 und das zweite Rastelement 10 am ersten Hebelelement 11 angeordnet. Dabei bilden die erste Schwenkachse S1 und die zweite Schenkachse S2 eine gemeinsame Schwenkachse. Das erste Hebelelement 11 ist um die gemeinsame Schwenkachse verschwenkbar. In einer anderen, in den Figuren nicht gezeigten Ausführungsform wäre es auch denkbar, dass die beiden Rastelemente 9, 10 an unterschiedlichen Hebelelementen angeordnet sind.

Wie von den Figuren ersichtlich ist, weist die Verbindungseinheit 5 gemäss der gezeigten Ausführungsform, ein zweites Hebelelement 12 auf. Das zweite Hebelelement 12 ist ebenfalls um eine weitere Schwenkachse S3 am Supportelement schwenkbar gelagert. Das zweite Hebelelement 12 ist von einer Ausgangslage in eine Verbindungslage verschwenkbar. In der Verbindungslage ist das dritte Rastelement 13 in festem Eingriff mit der ersten Profilnut 2 ist.

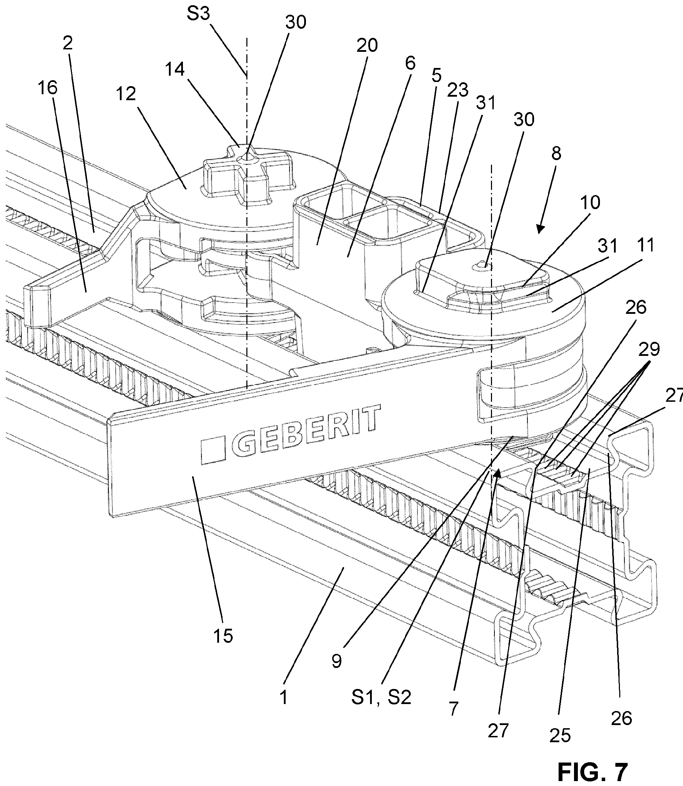

Die Montage der Anordnung wird anhand der Figuren 7 bis 12 genauer erläutert.

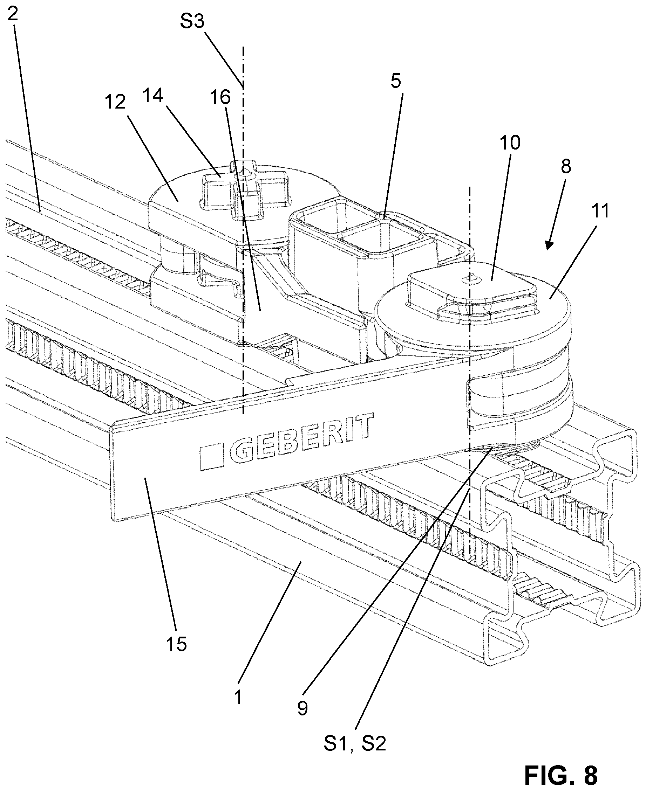

In einem ersten Schritt, der in der Figur 7 gezeigt wird, wird das erste Profil 1 auf der ersten Seite 7 des Supportelements 6 positioniert, was in der Figur 8 gezeigt wird.

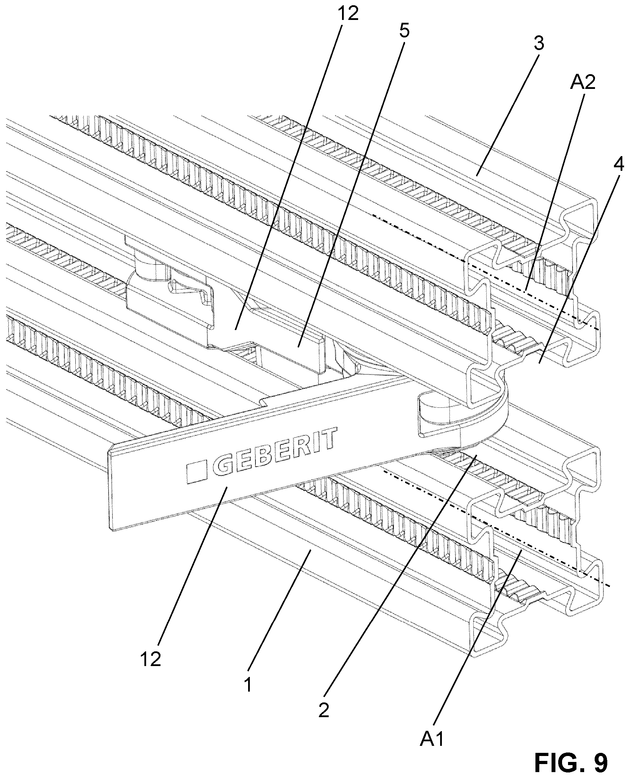

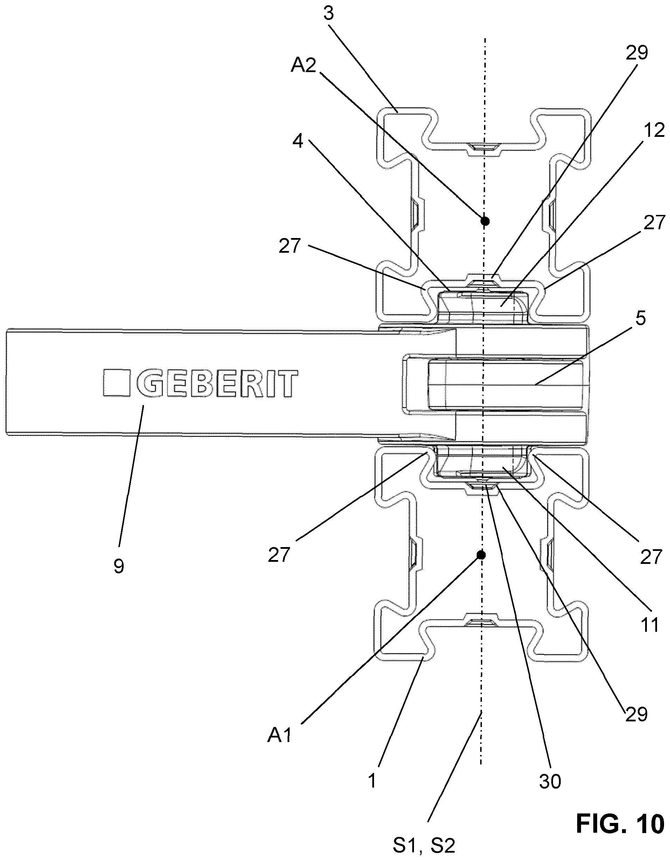

In einem anschliessenden Zwischenschritt wird das zweite Hebelelement 12 mit dem dritten Rastelement 13 von seiner Ausgangslage in die Verbindungslage verschwenkt. In den Figuren 9 und 10 wird das zweite Hebelelement 12 in seiner Verbindungslage gezeigt. In der Verbindungslage wird das dritte Rastelement 13 in den festen Eingriff mit der ersten Profilnut 2 gebracht.

In einem zweiten Schritt wird das zweite Profil 3 auf der zweiten Seite 8 des Supportelements 6 positioniert. Dies wird in den Figuren 9 und 10 gezeigt.

In einem dritten Schritt wird das erste Hebelelement 11 von seiner Ausgangslage in die Verbindungslage verschwenkt, wobei das erste Rastelement 9 von seiner Ausgangslage in die Verbindungslage verschwenkt wird, so dass das erste Rastelement 9 in den festen Eingriff mit der ersten Profilnut 2 gebracht wird und auch das zweite Rastelement 10 wird von seiner Ausgangslage in die Verbindungslage verschwenkt wird, so dass das zweite Rastelement 10 in den festen Eingriff mit der zweiten Profilnut 4 gebracht wird.

Nach ausführen der genannten Schritte sind die beiden Profile durch den Eingriff der jeweiligen Rastelemente 9, 10 in die jeweilige Profilnut 2, 4 miteinander verbunden.

In der Folge werden nun weitere optionale Merkmale der gezeigten Ausführungsform genauer beschrieben:
Vorzugsweise sind das erste Hebelelement 11 und das zweite Hebelelement 12 aus unterschiedlichen Materialien. Das Material des ersten Hebelelements 11 weist eine höhere Festigkeit auf als das Material des zweiten Hebelelements 12. Beispielsweise ist das erste Hebelelement 11 ein druckgiessbares Metall und das zweite Hebelelement ist ein Kunststoff.

Von den Figuren 10/12 wird die Struktur der Profile 1, 3 und der Rastelemente 9, 10, 13 ersichtlich. Die erste Profilnut 2 ist durch jeweils einen Grundschenkel 25 und zwei vom Grundschenkel 25 abstehende Seitenschenkel 26 begrenzt. Jeder der Seitenschenkel 26 weist eine in die Profilnut 2 einragende Auskragung 27 auf. Gleichermassen ist die zweite Profilnut 4 ausgebildet. Die Rastelemente 9, 10, 13 verfügen jeweils über zwei Rastnuten 31, welche bezüglich der Schwenkachse S1, S2, S3 einander gegenüberliegen. Jede der beiden Rastnuten 31 bei der Schwenkbewegung von der Ausgangslage in die Verbindungslage einen Eingriff mit jeweils einer Auskragung 27 eingeht. Das erste Profil 1 und das zweite Profil 3 sind im Wesentlichen identisch zueinander ausgebildet sind.

Das erste Profil 1 und das zweite Profil 3 weist einen im Wesentlichen quadratischen Querschnitt auf. Auf jeder der Aussenflächen 22, 24 ist jeweils eine entsprechende Profilnut 2, 4 angeordnet.

Der feste Eingriff zwischen dem ersten Rastelement 9 und der ersten Profilnut 2 stellt eine feste Rastverbindung zwischen der Verbindungseinheit 5 und dem ersten Profil 1 bereit. Die Rastverbindung ist von der Figur 12 ersichtlich. Bei der in den Figuren gezeigten Ausführungsform greifen zwei einander gegenüberliegende Rasteinbuchtungen 29 am ersten Rastelement 9 in zwei einander gegenüberliegende Auskragungen 27 an der ersten Profilnut 2 ein. Gleichermassen wird der feste Eingriff zwischen dem zweiten Rastelement 10 und der zweiten Profilnut 4 als eine feste Rastverbindung zwischen der Verbindungseinheit 5 und dem zweiten Profil 3 bereitgestellt. Der feste Eingriff zwischen dem dritten Rastelement 13 und der ersten Profilnut 2 ist eine Halteverbindung. Die Halteverbindung ist vorzugsweise derart ausgebildet, dass die Verbindungseinheit am Profil festlegbar ist.

Von den Figuren 1, 2, 4, 5 und 7 ist weiterhin ersichtlich, dass das zweite Hebelelement 12 einen Positionierungsabschnitt 14 aufweist. Der Positionierungsabschnitt 14 ist der zweiten Seite 8 zugewandt, wobei während der Positionierung des zweiten Profils 3 der Positionierungsabschnitt 14 in die zweite Profilnut 4 einführbar ist. Durch das Eingleiten des Positionierungsabschnitts 14 in die zweite Profilnut 4 kann bei der Montage des zweiten Profils 3 eine Führung bereitgestellt werden. In der gezeigten Ausführungsform hat der Positionierungsabschnitt 14 die Form eines Kreuzes.

Das erste Hebelelement 11 weist einen ersten Betätigungsarm 15 auf und das zweite Hebelelement 12 weist einen zweiten Betätigungsarm 16 auf. Der zweite Betätigungsarm 16 wird vom ersten Betätigungsarm überdeckt 15, wenn die Rastelemente 9, 10 in der Verbindungslage sind. Dies wird in den Figuren 11 und 12 gezeigt. Diese Art der Überdeckung ist vorteilhaft, weil für die Betätigung des ersten Hebelelements 11 für die Bewegung aus der Rastlage eine grössere Kraft als für die Betätigung des zweiten Hebelelements 12 aus der Rastlage. Somit sichert das erste Hebelelement 11 das zweite Hebelelement 12 von einer unbeabsichtigten Betätigung.

Von der Figur 12 ist weiterhin ersichtlich, dass in der Verbindungslage die beiden Betätigungsarme 15, 16 vorzugsweise vollständig im Zwischenraum Z zwischen den beiden Profilen 1, 3 liegen und nicht aus dem Zwischenraum Z zwischen den beiden Profilen 1, 3 seitlich zu den Profilachsen A1, A2 hervorstehen. Dies hat den Vorteil, dass es bei der Montage einer Beplankungswand zu keinen Kollisionen zwischen der Beplankungswand und Teilen von der Verbindungseinheit 5 kommt.

Von der Figur 1 ist die Lagerung der Hebelelemente 11, 12 ersichtlich. Jedes der genannten Hebelelemente 11, 12 weist jeweils eine hebelseitige Lagerstelle 17 auf. Das Supportelement 6 weist für jedes der genannten Hebelelemente 11, 12 jeweils eine supportelementseitige Lagerstelle 18 auf. Die jeweilige hebelseitige Lagerstelle 17 ist in der jeweiligen supportelementseitigen Lagerstelle 18 schwenkbar gelagert. Die hebelseitige Lagerstelle 17 und die supportelementseitige Lagerstelle 18 sind vorzugsweise derart ausgebildet, dass die beiden Lagerstellen 17, 18 ineinander eingeklipst werden können.

Von der Figur 1 ist ersichtlich, dass das Supportelement 6 auf der ersten Seite 7 ein erstes Führungselement 19 aufweist, welches in die erste Profilnut 2 einragt und dass das Supportelement 6 auf der zweiten Seite 8 ein zweites Führungselement 20 aufweist, welches in die zweite Profilnut 4 einragt. Mit den beiden Führungselementen 19, 20 kann die Stabilität der Verbindung erhöht werden. Das Supportelement 6 weist auf der ersten Seite 7 eine erste Stützfläche 21 auf, auf welcher das erste Profil 1 mit einer ersten Aussenfläche 22 aufliegt. Auf der zweiten Seite 8 weist das Supportelement 6 eine zweite Stützfläche 23 auf, auf welcher das zweite Profil 3 mit einer zweiten Aussenfläche 24 aufliegt.

Von den Figuren ist weiterhin ersichtlich, dass die erste Profilnut 2 und/oder die zweite Profilnut 4 am Nutengrund 28 eine Vielzahl von beabstandet zueinander liegenden Rasteinbuchtungen 29 aufweist. Mindestens eines der Rastelemente 9, 10, 13 weist eine optionale Nocke 30 auf, welche zur Positionierung der Verbindungseinheit 5 in eine der Rasteinbuchtungen 29 eingreift. Die Nocke 30 liegt hier jeweils zentrisch zur jeweiligen Schwenkachse.

### BEZUGSZEICHENLISTE

- 1: erstes Profil
- 2: erste Profilnut
- 3: zweites Profil
- 4: zweite Profilnut
- 5: Verbindungseinheit
- 6: Supportelement
- 7: erste Seite
- 8: zweite Seite
- 9: erstes Rastelement
- 10: zweites Rastelement
- 11: erstes Hebelelement
- 12: zweites Hebelelement
- 13: drittes Rastelement
- 14: Positionierungsabschnitt
- 15: erster Betätigungsarm
- 16: zweiter Betätigungsarm
- 17: hebelseitige Lagerstelle
- 18: supportelementseitige Lagerstelle
- 19: erstes Führungselement
- 20: zweites Führungselement
- 21: erste Stützfläche
- 22: erste Aussenfläche
- 23: zweite Stützfläche
- 24: zweite Aussenfläche
- 25: Grundschenkel
- 26: Seitenschenkel
- 27: Auskragung
- 28: Nutengrund
- 29: Rasteinbuchtung
- 30: Nocke

- A1: erste Profilachse
- A2: zweite Profilachse
- S1: erste Schwenkachse
- S2: zweite Schwenkachse
- S3: weitere Schwenkachse
- Z: Zwischenraum

## Patentansprüche

1. Anordnung umfassend
ein sich entlang einer ersten Profilachse (A1) ersteckendes erstes Profil (1) mit einer ersten Profilnut (2),
ein sich entlang einer zweiten Profilachse (A2) ersteckendes zweites Profil (3) mit einer zweiten Profilnut (4) und
mindestens eine Verbindungseinheit (5) mit einem Supportelement (6) mit einer ersten Seite (7), die dem ersten Profil (1) zugewandt ist, und einer zweiten Seite (8), die dem zweiten Profil (3) zugewandt ist, sowie mit einem ersten Rastelement (9) und einem zweiten Rastelement (10),
wobei das erste Rastelement (9) von einer Ausgangslage um eine erste Schwenkachse (S1) in eine Verbindungslage schwenkbar am Supportelement (6) gelagert ist und das zweite Rastelement (10) von einer Ausgangslage um eine zweite Schwenkachse (S2) in eine Verbindungslage schwenkbar am Supportelement (6) gelagert ist, und
wobei in der jeweiligen Verbindungslage das erste Rastelement (9) in festem Eingriff mit der ersten Profilnut (2) ist und das zweite Rastelement (10) in festem Eingriff mit der zweiten Profilnut (4) ist, derart, dass mit der mindestens einen Verbindungseinheit (5) das erste Profil (1) mit dem zweiten Profil (3) verbunden ist.

2. Anordnung (1) nach Anspruch 1, **dadurch gekennzeichnet, dass** das erste Rastelement (9) und das zweite Rastelement (10) an einem ersten Hebelelement (11) angeordnet sind, wobei die erste Schwenkachse (S1) und die zweite Schenkachse (S2) eine gemeinsame Schwenkachse bilden und wobei das erste Hebelelement (11) um die gemeinsame Schwenkachse verschwenkbar ist.

3. Anordnung (1) nach Anspruch 2, **dadurch gekennzeichnet, dass** ein zweites Hebelelement (12) angeordnet ist, welches ein drittes Rastelement (13) aufweist, welches der ersten Seite (7) zugeordnet ist, wobei das zweite Hebelelement (12) von einer Ausgangslage um eine weitere Schwenkachse (S3) in eine Verbindungslage schwenkbar am Supportelement (6) gelagert und wobei das dritte Rastelement (13) in der Verbindungslage in festem Eingriff mit der ersten Profilnut (2) ist.

4. Anordnung (1) nach einem der vorhergehenden Anspruch 2 und 3, **dadurch gekennzeichnet, dass** das erste Hebelelement (11) und das zweite Hebelelement (12) aus unterschiedlichen Materialien sind, wobei das Material des ersten Hebelelements (11) eine höhere Festigkeit aufweist als das Material des zweiten Hebelelements (12); oder dass das erste Hebelelement (11) und das zweite Hebelelement (12) aus gleichen Materialien sind.

5. Anordnung (1) nach Anspruch 4, **dadurch gekennzeichnet, dass** das Material des ersten Hebelelements (11) und/oder des zweiten Hebelelements (12) ein druckgiessbares Metall ist, wie Zinkdruckguss oder Aluminiumdruckguss; und/oder dass das Material des ersten Hebelelements (11) und/oder des zweiten Hebelelements (12) ein Kunststoff, wie Acrylnitril-Styrol-Acrylat-Copolymer oder Acrylnitril-Butadien-Styrol-Copolymer ist.

6. Anordnung (1) nach einem der vorhergehenden Ansprüche 2 bis 5, **dadurch gekennzeichnet, dass** der feste Eingriff zwischen dem ersten Rastelement (9) und der ersten Profilnut (2) eine feste Rastverbindung zwischen der Verbindungseinheit (5) und dem ersten Profil (1) bereitstellt; dass der feste Eingriff zwischen dem zweiten Rastelement (10) und der zweiten Profilnut (4) eine feste Rastverbindung zwischen der Verbindungseinheit (5) und dem zweiten Profil (3) bereitstellt; und dass der feste Eingriff zwischen dem dritten Rastelement (13) und der ersten Profilnut (2) eine Halteverbindung ist, wobei die Halteverbindung vorzugsweise kleinere Kräfte aufnehmen kann als die besagte feste Rastverbindung.

7. Anordnung (1) nach einem der vorhergehenden Ansprüche 2 bis 6, **dadurch gekennzeichnet, dass** das zweite Hebelelement (12) einen Positionierungsabschnitt (14) aufweist, welche der zweiten Seite (8) zugewandt ist, wobei während der Positionierung des zweiten Profils (3) der Positionierungsabschnitt (14) in die zweite Profilnut (4) einführbar ist.

8. Anordnung (1) nach einem der vorhergehenden Ansprüche 2 bis 7, **dadurch gekennzeichnet, dass** das erste Hebelelement (11) einen ersten Betätigungsarm (15) aufweist und dass das zweite Hebelelement (12) einen zweiten Betätigungsarm (16) aufweist, wobei vorzugsweise der zweite Betätigungsarm (16) vom ersten Betätigungsarm überdeckt (15) wird, wenn die Rastelemente in der Verbindungslage sind,
wobei in der Verbindungslage die beiden Betätigungsarme (15, 16) vorzugsweise vollständig im Zwischenraum (Z) zwischen den beiden Profilen (1, 3) liegen und nicht aus dem Zwischenraum (Z) zwischen den beiden Profilen (1, 3) seitlich zu den Profilachsen (A1, A2) hervorstehen.

9. Anordnung (1) nach Anspruch 1, **dadurch gekennzeichnet, dass** das erste Rastelement an einem ersten Hebelelement angeordnet ist, welches erste Hebelelement um die erste Schwenkachse verschwenkbar ist, und dass das zweite Rastelement an einem weiteren Hebelelement angeordnet ist, welches weitere Hebelelement um die zweite Schwenkachse verschwenkbar ist, wobei die erste Schwenkachse und die zweite Schwenkachse parallel beabstandet zueinander verlaufen.

10. Anordnung nach Anspruch 9, **dadurch gekennzeichnet,**
**dass** das Material des ersten und des weiteren Hebelelements ein druckgiessbares Metall ist, wie Zinkdruckguss oder Aluminiumdruckguss; und/oder
**dass** das erste Hebelelement einen ersten Betätigungsarm aufweist und dass das weitere Hebelelement einen weiteren Betätigungsarm aufweist,
wobei in der Verbindungslage der erste Betätigungsarm vom weiteren Betätigungsarm vorzugsweise überdeckt wird, und
wobei in der Verbindungslage die beiden Betätigungsarme vorzugsweise vollständig im Zwischenraum zwischen den beiden Profilen liegen und nicht aus dem Zwischenraum zwischen den beiden Profilen seitlich zu den Profilachsen hervorstehen.

11. Anordnung (1) nach einem der vorhergehenden Ansprüche 2 bis 10, **dadurch gekennzeichnet, dass** jeder der genannten Hebelelemente jeweils eine hebelseitige Lagerstelle (17) aufweist und dass das Supportelement (6) für jedes der genannten Hebelelemente (11, 12) jeweils eine supportelementseitige Lagerstelle (18) aufweist, wobei die jeweilige hebelseitige Lagerstelle (17) in der jeweiligen supportelementseitigen Lagerstelle (18) schwenkbar gelagert ist.

12. Anordnung (1) nach einem der vorhergehenden Ansprüche, **dadurch gekennzeichnet, dass** das Supportelement (6) auf der ersten Seite (7) ein erstes Führungselement (19) aufweist, welches in die erste Profilnut (2) einragt; und/oder das Supportelement (6) auf der zweiten Seite (8) ein zweites Führungselement (20) aufweist, welches in die zweite Profilnut (4) einragt.

13. Anordnung (1) nach einem der vorhergehenden Ansprüche, **dadurch gekennzeichnet, dass** das Supportelement (6) auf der ersten Seite (7) eine erste Stützfläche (21) aufweist, auf welcher das erste Profil (1) mit einer ersten Aussenfläche (22) aufliegt; und dass das Supportelement (6) auf der zweiten Seite (8) eine zweite Stützfläche (23) aufweist, auf welcher das zweite Profil (3) mit einer zweiten Aussenfläche (24) aufliegt.

14. Anordnung (1) nach einem der vorhergehenden Ansprüche, **dadurch gekennzeichnet,**
**dass** die erste Profilnut (2) und die zweite Profilnut (4) durch jeweils einen Grundschenkel (25) und zwei vom Grundschenkel (25) abstehende Seitenschenkel (26) begrenzt ist, wobei jeder der Seitenschenkel (26) eine in die jeweilige Profilnut (2, 4) einragende Auskragung (27) aufweist,
und **dass** die Rastelemente (9, 10, 13) jeweils über zwei Rastnuten (31) verfügen, welche bezüglich der Schwenkachse (S1, S2) einander gegenüberliegen,
wobei jede der beiden Rastnuten (31) bei der Schwenkbewegung von der Ausgangslage in die Verbindungslage einen Eingriff mit jeweils einer Auskragung (27) eingeht.

15. Anordnung (1) nach einem der vorhergehenden Ansprüche, **dadurch gekennzeichnet, dass** das erste Profil (1) und das zweite Profil (3) identisch zueinander ausgebildet sind; und/oder
dass das erste Profil (1) und das zweite Profil (3) einen im Wesentlichen quadratischen Querschnitt aufweist, wobei auf jeder der Aussenflächen (22, 24) jeweils eine entsprechende Profilnut (2, 4) angeordnet ist; und/oder
die erste Profilnut (2) und/oder die zweite Profilnut (4) am Nutengrund (28) eine Vielzahl von beabstandet zueinander liegenden Rasteinbuchtungen (29) aufweist und dass mindestens eines der Rastelemente (9, 10, 13) eine Nocke (30) aufweist, welche zur Positionierung der Verbindungseinheit (5) in eine der Rasteinbuchtungen (29) eingreift, wobei die Nocke (30) zentrisch zur besagten Schwenkachse (S1, S2) liegt.

16. Sanitärwand umfassend eine Anordnung nach einem der vorhergehenden Ansprüche und eine Beplankungswand, wobei die Beplankungswand auf den genannten Profilen aufliegt.

17. Verfahren zum Zusammenbau einer Anordnung nach einem der vorhergehenden Ansprüche, **dadurch gekennzeichnet, dass**
in einem ersten Schritt das erste Profil (1) auf der ersten Seite (7) des Supportelements (6) positioniert wird;
in einem zweiten Schritt das zweite Profil (3) auf der zweiten Seite (8) des Supportelements (6) positioniert wird; und
in einem dritten Schritt das erste Rastelement (9) von seiner Ausgangslage in die Verbindungslage verschwenkt wird, so dass das erste Rastelement (9) in den festen Eingriff mit der ersten Profilnut (2) gebracht wird und das zweite Rastelement (10) von seiner Ausgangslage in die Verbindungslage verschwenkt wird, so dass das zweite Rastelement (10) in den festen Eingriff mit der zweiten Profilnut (4) gebracht wird.

18. Verfahren nach Anspruch 17 zum Bereitstellen einer Anordnung nach einem der vorhergehenden Ansprüche 3 bis 8 oder 11 bis 15, **dadurch gekennzeichnet, dass** in einem Zwischenschritt zwischen dem ersten und dem zweiten Schritt, das dritte Rastelement (13) von seiner Ausgangslage in die Verbindungslage verschwenkt wird, so dass das dritte Rastelement (13) in den festen Eingriff mit der ersten Profilnut (2) gebracht wird.
